(19) **Europäisches Patentamt / European Patent Office / Office européen des brevets**

(11) **EP 1 597 095 B1**

(12) **FASCICULE DE BREVET EUROPEEN**

(45) Date de publication et mention de la délivrance du brevet:
**09.09.2009 Bulletin 2009/37**

(51) Int Cl.:
***B60C 9/20*** *(2006.01)*

(21) Numéro de dépôt: **04710816.2**

(22) Date de dépôt: **13.02.2004**

(86) Numéro de dépôt international:
**PCT/EP2004/001354**

(87) Numéro de publication internationale:
**WO 2004/076205 (10.09.2004 Gazette 2004/37)**

(54) **ARMATURE DE SOMMET POUR PNEUMATIQUE RADIAL**

GÜRTELVERSTÄRKUNG FÜR EINEN RADIALREIFEN

CROWN REINFORCEMENT FOR A RADIAL TYRE

(84) Etats contractants désignés:
**AT BE BG CH CY CZ DE DK EE ES FI FR GB GR HU IE IT LI LU MC NL PT RO SE SI SK TR**

(30) Priorité: **17.02.2003 FR 0301903**

(43) Date de publication de la demande:
**23.11.2005 Bulletin 2005/47**

(73) Titulaires:
• **Société de Technologie Michelin**
  **63000 Clermont-Ferrand Cedex 09 (FR)**
• **Michelin Recherche et Technique S.A.**
  **1763 Granges-Paccot (CH)**

(72) Inventeurs:
• **CALLAMAND, Stéphane**
  **Fujimi Building 1-6-1 Fujimi (JP)**
• **BONDU, Lucien**
  **F-63800 La Roche Noire (FR)**

(74) Mandataire: **Le Cam, Stéphane Georges Elie**
  **M.F.P. Michelin,**
  **SGD/LG/PI - F 35 - Ladoux**
  **63040 Clermont-Ferrand Cedex 09 (FR)**

(56) Documents cités:
| | |
|---|---|
| EP-A- 1 167 079 | WO-A-99/39927 |
| US-A- 3 543 828 | US-A- 4 082 132 |
| US-A- 4 235 274 | US-A- 4 696 335 |

# Description

La présente invention concerne un pneumatique à armature de carcasse radiale, destiné à équiper des véhicules lourds tels que camions, bus, tracteurs, remorques... etc, et concerne plus particulièrement l'armature de sommet d'un tel pneumatique.

D'une manière générale, l'armature de carcasse radiale du pneumatique considéré, - formée d'éléments de renforcement métalliques ou en polyamide aromatique inextensibles, est surmontée radialement d'une armature de sommet comprenant plusieurs nappes de sommet ; en particulier une nappe de triangulation formée d'éléments métalliques orientés par rapport à la direction circonférentielle d'un angle important compris entre 45° et 90°, ladite nappe de triangulation étant elle-même surmontée de deux nappes de travail formées d'éléments de renforcement métalliques inextensibles, parallèles entre eux dans chaque nappe et croisés d'une nappe à la suivante en faisant avec la direction circonférentielle des angles compris entre 10° et 45°. Lesdites nappes de travail, formant l'armature de travail, peuvent encore être recouvertes d'au moins une nappe dite de protection et formée d'éléments de renforcement généralement métalliques et extensibles, dits élastiques.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Dans le cas de pneumatique pour véhicules "Poids-Lourds", une seule nappe de protection est habituellement présente et ses éléments de protection sont, dans la plupart des cas, orientés dans la même direction et avec le même angle en valeur absolue que ceux des éléments de renforcement de la nappe de travail radialement la plus à l'extérieur et donc radialement adjacente. Dans le cas de pneumatiques de Génie Civil destinés aux roulages sur sols plus ou moins accidentés, la présence de deux nappes de protection est avantageuse, les éléments élastiques étant croisés d'une nappe à la suivante et les éléments de renforcement de la nappe de protection radialement intérieure étant croisés avec les éléments de renforcement inextensibles de la nappe de travail radialement extérieure et adjacente à ladite nappe de protection radialement intérieure.

Le demande JP 59/118 507, dans le but d'éviter la séparation entre nappes de sommet, montre une telle architecture d'armature avec une nappe radialement extérieure d'une part formée d'éléments de renforcement en textile à haut module faisant avec la direction circonférentielle un angle en valeur absolue plus faible que l'angle formé par les éléments de la nappe de travail radialement à l'extérieur, et d'autre part ayant une largeur axiale supérieure à la largeur de ladite nappe de travail tout en restant inférieure à la largeur de la nappe de travail radialement intérieure.

La demande JP 03/262 704 décrit et montre, dans un but identique, une solution très proche de la précédente en ce qui concerne les largeurs axiales des nappes et angles des éléments de renforcement des dites nappes. Elle spécifie en outre que la nappe radialement la plus à l'extérieur a un allongement à la rupture d'au moins 5%.

Dans le but de préserver les nappes de travail de la corrosion, et d'éviter la séparation entre armature de sommet et bande de roulement, le document JP 04/055 104, adoptant pratiquement les mêmes largeurs axiales de nappes de sommet, préconise l'emploi d'éléments de renforcement en polyester aromatique pour la nappe de protection.

Le brevet FR 2 493 236, dans le but de résoudre, semble-t-il, les problèmes posés par un roulage sur route grossière, préconise une architecture semblable aux précédentes mais avec une utilisation dans les nappes radialement intérieure et extérieure d'éléments de renforcement dont l'allongement à la rupture est supérieur d'au moins 40% à l'allongement à la rupture des éléments de renforcement des deux nappes de travail.

Les progrès réalisés en durée de vie (nombre de kilomètres parcourus) sur usure des enveloppes "Poids-Lourds", ainsi que la possibilité d'un rechapage ultérieur, aisé et économique, demande une armature de sommet dont la résistance à la séparation entre les bords de nappes de travail soit améliorée.

Le brevet FR 2 800 672, en vue de limiter les séparations en extrémités de nappes de travail, revendique une architecture d'armature de sommet dans laquelle une nappe, dite de protection, présente une largeur axiale comprise entre celles des nappes de sommet de travail, les éléments de renforcement de la nappe de protection étant inclinés dans la même direction que les éléments de renforcement de la nappe de travail radialement adjacente et faisant avec la direction circonférentielle un angle supérieur, d'au moins 5°, à celui de ladite nappe de travail radialement adjacente.

Le brevet WO 99/39927, en vue de limiter les séparations en extrémités de nappes de sommet de travail, décrit une architecture d'armature de sommet avec au moins deux nappes de sommet de travail croisées, dont la plus radialement intérieure a la plus grande largeur axiale. Les extrémités de ces deux nappes de sommet de travail sont séparées par une combinaison de deux profilés de mélange caoutchouteux, l'extrémité du profilé radialement le plus intérieur et adjacent à la nappe de sommet de travail de plus grande largeur axiale étant axialement extérieure à l'extrémité de la nappe de sommet de travail de plus grande largeur axiale.

Dans leurs études et notamment durant l'étude de la réalisation de pneumatiques "Poids-Lourds" de durée de vie (nombre de kilomètres parcourus) sur usure toujours plus importante, les inventeurs se sont donnés pour mission de définir une architecture de sommet de pneumatiques permettant d'obtenir une résistance à la séparation entre les bords de nappes de travail encore améliorée.

Ce but a été atteint selon l'invention par un pneumatique comprenant une armature de carcasse radiale surmontée radialement d'une armature de sommet composée d'au moins une armature de travail formée de deux nappes d'éléments de renforcement métalliques inextensibles, calandrés de mélange caoutchouteux, parallèles entre eux dans chaque nappe et croisés d'une nappe à la suivante en formant avec la direction circonférentielle des angles $\alpha_1$ et $\alpha_2$ compris entre 10° et 45°, lesdites nappes de travail ayant des largeurs axiales $L_1$ et $L_2$, et d'au moins une nappe complémentaire, dite de protection, de largeur axiale $L_3$ telle que, $L_2 < L_3$, $L_2$ étant la largeur de la nappe de travail adjacente à la nappe de protection, et comportant des éléments de renforcement métalliques, ladite armature de sommet comprenant en outre, disposée entre au moins les extrémités des nappes de sommet de travail, une couche P de mélanges caoutchouteux cohésifs.

Un mélange caoutchouteux cohésif est un mélange caoutchouteux notamment robuste à la fissuration.

Un pneumatique tel qu'il vient d'être défini selon l'invention, c'est-à-dire possédant une armature de sommet telle que décrite permet de diminuer encore les risques de séparation entre les bords de nappes de travail et ainsi d'améliorer la durée de vie du pneumatique en autorisant notamment son rechapage. La couche P de mélanges caoutchouteux permet d'obtenir un découplage desdites nappes de travail, qui en combinaison avec la nappe complémentaire dite de protection conduit à une amélioration de la résistance à la séparation entre les bords de nappes de travail.

Selon une variante avantageuse de l'invention, la largeur $L_3$ de la nappe de protection est telle que $L_3 < L_1$. En d'autres termes, la nappe de protection présente une largeur axiale inférieure à la largeur axiale de la nappe sommet de travail radialement intérieure et est donc comprise entre les largeurs axiales des deux nappes de sommet de travail. Durant l'étude, il a été mis en évidence qu'il était notamment préférable d'éviter la coïncidence axiale des extrémités de la nappe de protection et de la nappe de sommet de travail radialement intérieur. Une telle architecture serait pénalisante quant à la séparation entre les bords des deux nappes de sommet de travail.

Avantageusement également, indépendamment de la relation précédente entre les largeurs axiales de la nappe de sommet de travail radialement intérieure et de la nappe de sommet de protection, la largeur axiale de la nappe de sommet de travail radialement intérieure est plus grande que la largeur axiale de la nappe de sommet de travail radialement extérieure. En d'autres termes, les largeurs $L_1$ et $L_2$ des nappes de sommet de travail satisfont avantageusement la relation : $L_1 > L_2$.

Selon un mode de réalisation préféré de l'invention, la couche P, à l'extrémité axialement extérieure de la nappe de sommet de travail radialement extérieure, présente une épaisseur telle que la distance d radiale entre les deux nappes de sommet de travail, séparées par ladite couche P, vérifie la relation:

$$3/5.\phi_2 < d < 5.\phi_2$$

avec $\phi_2$, diamètre des éléments de renforcement de la nappe de sommet de travail radialement extérieure.

La distance d est mesurée de câble à câble, c'est-à-dire entre le câble d'une première nappe de travail et le câble d'une seconde nappe de travail. En d'autres termes, cette distance d englobe l'épaisseur de la couche P et les épaisseurs respectives des mélanges caoutchouteux de calandrage, radialement extérieure aux câbles de la nappe de travail radialement intérieure et radialement intérieure aux câbles de la nappe de travail radialement extérieure.

De préférence encore selon l'invention, la distance radiale entre les deux nappes de sommet de travail, séparées par la couche P, étant égale à d, à l'extrémité de la nappe de sommet de travail radialement extérieure, l'extrémité de la nappe complémentaire, dite de protection, est séparée radialement de la nappe de sommet de travail de largeur $L_1$ par la couche P selon une distance d', telle que : $d \leq d' < d + 4.\phi_2$.

La distance d' est, comme la distance d précédemment, mesurée de câble à câble.

Ladite distance d' est supérieure ou égale à d de sorte que l'extrémité de la nappe de protection ne soit pas sollicitée du fait de la proximité des éléments de renforcement de la nappe de travail radialement intérieure. La couche P de mélanges caoutchouteux agit avantageusement comme une couche de découplage entre la nappe de travail radialement intérieur et la nappe de protection.

La même distance d' est de préférence inférieure à une distance correspondant à la distance d augmentée de quatre fois le diamètre des éléments de renforcement de la couche de travail radialement extérieure ; au-delà d'une telle valeur, la distance d' pourrait conduire à des difficultés lors des opérations de rechapage conduisant notamment à un risque d'endommagement de l'armature de sommet et donc à l'impossibilité d'effectuer un rechapage du pneumatique. En effet, l'élimination de la bande de roulement usée se fait habituellement jusqu'à une épaisseur relativement proche de l'armature de sommet qui doit en conséquence respecter des conditions de positionnement radial maximales telles qu'elle ne soit pas endommagée durant ladite élimination de la bande de roulement usée.

De la même façon que précédemment, la distance radiale entre les deux nappes de sommet de travail, séparées par la couche P, étant égale à d, à l'extrémité de la nappe de sommet de travail radialement extérieure, l'extrémité de la nappe de sommet de travail radialement intérieure est avantageusement distante de la nappe complémentaire, dite de protection, d'une distance d", telle que d" ≥d. Encore une fois, et plus spécifiquement dans le cas d'une nappe de protection dont la largeur $L_3$ est supérieure à la largeur $L_1$ de la nappe de travail radialement intérieure, la couche P de mélanges caoutchouteux agit avantageusement comme une couche de découplage entre la nappe de travail radialement intérieur et la nappe de protection, de sorte que les extrémités des éléments de renforcement de la nappe de travail radialement intérieure ne soit pas sollicitées du fait de la trop grande proximité des éléments de renforcement de la nappe de protection. En d'autres termes, les éléments de renforcement de la nappe de protection ne pénètrent avantageusement pas un cercle de rayon d centré sur l'extrémité des éléments de renforcement de la nappe de travail radialement intérieure.

La distance d" est, comme les distances d et d' précédemment, mesurée de câble à câble.

Selon une réalisation préférée de l'invention, notamment pour assurer une rigidité en dérive du pneumatique suffisante, les largeurs des nappes de sommet de travail satisfont la relation : $1 > L_2/L_1 \geq 2/3$.

De préférence encore selon l'invention, la largeur axiale D de la couche P comprise entre l'extrémité axialement intérieure de ladite couche P et l'extrémité de la nappe de sommet de travail radialement extérieure est telle que : $3.\phi_2 \leq D \leq 20.\phi_2$. Une telle relation définit une zone d'engagement entre la couche P de mélanges caoutchouteux et la nappe de travail radialement extérieure. Un tel engagement en dessous d'une valeur égale à trois fois le diamètre des éléments de renforcement de la nappe de travail radialement extérieure peut ne pas être suffisant pour obtenir un découplage des nappes de travail pour notamment obtenir une atténuation des sollicitations en extrémité de la nappe de travail radialement extérieure. Une valeur de cet engagement supérieure à vingt fois le diamètre des éléments de renforcement de la nappe de travail radialement extérieure peut conduire à une diminution trop importante de la rigidité de dérive.

De préférence encore, la largeur axiale D est supérieure à cinq fois le diamètre des éléments de renforcement de la nappe de travail radialement extérieure.

Un mode de réalisation préféré de l'invention prévoit que les éléments de renforcement de la nappe de protection sont inclinés dans la même direction que les éléments de renforcement de la nappe de travail radialement adjacente en faisant avec la direction circonférentielle un angle $\alpha_3$ de même sens et supérieur ou régal à l'angle $\alpha_2$ des éléments de renforcement de ladite nappe de travail adjacente à la nappe de protection.

De préférence, l'angle $\alpha_3$, formé par les éléments de renforcement de la nappe de protection avec la direction circonférentielle, est supérieur ou égal en valeur absolue à l'angle $\alpha_2$ des éléments de ladite nappe de travail radialement adjacente d'au moins 5°.

De préférence encore, la différence angulaire $\alpha_3 - \alpha_2$ est au plus égale à 20°.

Si ladite différence est inférieure à 5°, la résistance à la séparation entre nappes de travail n'est pas améliorée ; si la différence est supérieure à 20°, il est possible que la séparation entre les bords des deux nappes de travail soit pénalisée, contrairement à ce qui est recherché. L'angle $\alpha_3$ est encore avantageusement inférieur à 45°.

Dans une variante avantageuse de l'invention, l'armature de sommet est complétée, radialement entre l'armature de carcasse et l'armature de travail par une nappe de triangulation formée d'éléments métalliques inextensibles, faisant de préférence avec la direction circonférentielle un angle $\alpha_0$ de même direction que l'angle $\alpha_1$ formé par les éléments de renforcement de la nappe de travail radialement la plus intérieure et compris entre 45° et 90°.

Comme connu en soi, l'addition entre armature de travail et armature de carcasse d'une nappe dite de triangulation, peut être avantageuse, ladite nappe étant formée d'éléments métalliques fortement inclinés par rapport à la direction circonférentielle, et ayant de préférence une largeur axiale $L_0$ inférieure à la largeur $L_1$ de la nappe de sommet de travail radialement intérieure.

Selon une réalisation avantageuse de l'invention, notamment destinée à des applications « Poids-Lourds », la nappe de protection est formée de câbles extensibles en acier ou dits élastiques. De tels éléments de renforcement métalliques de la nappe de protection présentent avantageusement un allongement relatif au moins égal à 4% à la rupture.

Selon une première variante de l'invention, la couche P de mélange caoutchouteux est telle que le module de ladite couche est identique dans les différentes zones de ladite couche au contact des calandrages des deux nappes de sommet de travail à son contact.

Selon une autre variante de l'invention, la couche P de mélanges caoutchouteux est constituée d'un empilement d'au moins deux couches de mélanges caoutchouteux $P_1$ et $P_2$ de modules d'élasticité respectifs $MP_1$ et $MP_2$, à 10% d'élongation choisis avantageusement tels que $MP_1 > MP_2$, le mélange $P_1$, radialement le plus extérieur, étant au contact de la nappe de sommet de travail radialement la plus extérieure. Une telle réalisation de l'invention autorise une réduction des sollicitations de la couche de mélange caoutchouteux $P_1$ au contact de la nappe de sommet de travail radialement extérieure par rapport aux sollicitations de la couche de mélange caoutchouteux $P_2$. Une telle réalisation permet encore d'améliorer la résistance à la séparation entre les extrémités des nappes de sommet de travail.

Selon cette variante de réalisation de l'invention, l'extrémité axialement extérieure de la couche de mélange caoutchouteux $P_2$ est de préférence axialement intérieure à l'extrémité de la nappe de sommet de travail radialement intérieure, pour ne pas dégrader la résistance à la séparation de ladite extrémité de la nappe de sommet de travail radialement intérieure. L'extrémité axialement intérieure de ladite couche de mélange caoutchouteux $P_2$ est quant à elle avantageusement axialement extérieure à l'extrémité axialement intérieure de la couche de mélange caoutchouteux $P_1$.

Une autre variante de l'invention prévoit encore que la couche P de mélanges caoutchouteux est constituée d'un empilement d'au moins deux couches de mélanges caoutchouteux $P_1$ et $P_2$ de modules d'élasticité respectifs $MP_1$ et $MP_2$, à 10% d'élongation tels que $MP_1 < MP_2$, le mélange $P_1$, radialement le plus extérieur, étant au contact de la nappe de sommet de travail radialement la plus extérieure.

Selon une autre réalisation avantageuse de l'invention, ledit pneumatique comprend une couche de mélange caoutchouteux cohésif GB radialement à l'intérieur de l'armature de travail, l'extrémité axialement extérieure de ladite couche GB étant à une distance du plan équatorial supérieure à $L_1/2$.

Selon cette autre réalisation de l'invention, lorsque l'armature de sommet comprend une nappe de triangulation radialement entre l'armature de carcasse et l'armature de travail, la couche de mélange caoutchouteux GB est soit radialement intérieure à ladite nappe de triangulation, soit radialement, au moins en partie entre, la nappe de sommet de travail radialement intérieure et la nappe de triangulation, et donc avantageusement au contact de la nappe de sommet de travail radialement intérieure et au contact de la nappe de triangulation, celle-ci étant de préférence axialement plus étroite que la nappe de sommet de travail radialement intérieure. Les essais réalisés pendant les études ont mis en évidence qu'une telle couche de mélange caoutchouteux GB contribue également à améliorer la résistance à la séparation des extrémités des nappes de sommet de travail.

Une autre réalisation avantageuse de l'invention prévoit encore, notamment pour limiter les risques de dégradation des pneumatiques dus à la formation de fissures entre les extrémités des éléments de renforcement des nappes de travail et à la propagation de celles-ci, au moins dans chaque épaule, une nappe d'éléments de renforcement, avantageusement de faible diamètre, parallèles entre eux dans la nappe et formant avec la direction circonférentielle un angle compris entre 70 et 110°, le bord axialement intérieur de ladite nappe additionnelle étant radialement adjacent à au moins un bord de l'une des nappes de l'armature de sommet, et le bord axialement extérieur de ladite nappe additionnelle étant de préférence radialement intérieur au bord de la nappe auquel la nappe additionnelle est adjacente.

Le bord d'une nappe est défini comme une zone limitée de la nappe délimitée axialement par une extrémité de ladite nappe.

Une réalisation avantageuse de l'invention prévoit que les éléments de renforcement de la nappe additionnelle d'épaule sont dits de faible diamètre, comparativement au diamètre compacté des éléments métalliques des nappes de sommet de travail du pneumatique, lorsque ledit diamètre compacté est inférieur à 0,5 fois le diamètre compacté des éléments métalliques des nappes de sommet de travail du pneumatique.

De préférence encore, le diamètre compacté des éléments de renforcement de la nappe additionnelle est inférieur à 1 mm.

Le diamètre compacté est le diamètre mesuré d'un élément de renforcement lorsque les fils le constituant sont au contact les uns des autres.

Ces diamètres des éléments de renforcement de la nappe additionnelle autorisent la présence de ladite nappe sans que lesdits éléments de renforcement et plus particulièrement leurs extrémités soient une nouvelle source de risque de dégradation au sein du pneumatique.

Il est apparu qu'une telle nappe réalisée selon l'invention améliore de façon très sensible la résistance du pneumatique contre des chocs touchant l'épaule.

Les éléments de renforcement de la nappe additionnelle peuvent être de type textile ou métallique.

Selon un mode de réalisation avantageux de l'invention et plus particulièrement dans le cas d'une nappe additionnelle d'épaule dont le bord axialement extérieur se situe au moins dans la partie radialement supérieure de la zone du flanc, les éléments de renforcement de ladite nappe additionnelle sont métalliques ; il apparaît que le pneumatique selon l'invention satisfait alors à un autre besoin. En effet, un pneumatique ainsi réalisé permet de limiter les risques de dégradation dus à la génération de chaleur apparaissant du fait de l'hystérèse des élastomères sans nuire par ailleurs aux autres propriétés recherchées des caoutchoucs ou plus directement des pneumatiques.

Les dits éléments de renforcement sont alors, de préférence encore, en acier, l'acier étant reconnu comme très bon conducteur de la chaleur.

Le pneumatique selon l'invention autorise par la présence des nappes additionnelles placées aux épaules l'évacuation rapide vers la surface extérieure du pneumatique des calories produites pendant le roulage. En effet, le positionnement des nappes additionnelles permet de conduire la chaleur vers les zones de flanc où la masse caoutchouteuse est moins importante et autorise donc une évacuation des calories plus rapides même si la nature du caoutchouc n'est pas plus favorable à une bonne conduction ; la faible épaisseur permet en effet à la chaleur d'être éliminée plus rapidement le chemin à parcourir étant faible du coeur de la masse caoutchouteuse vers la surface extérieure. Le pneumatique selon l'invention permet ainsi de diminuer les températures de fonctionnement qui pourraient conduire à une diminution de la durée de vie des pneumatiques.

Selon un mode de réalisation préférentielle de l'invention, la nappe additionnelle a son bord axialement intérieur adjacent radialement à l'extérieur au bord de la nappe de protection.

Selon cette réalisation de l'invention, la nappe additionnelle est avantageusement au contact de la couche de mélange caoutchouteux P qui permet de découpler les extrémités libres des éléments de renforcement des différentes nappes de travail.

En outre, le bord axialement extérieur de la nappe additionnelle d'épaule est quant à lui avantageusement axialement adjacent au profilé de mélange caoutchouteux dont l'une des ailes assure, comme connu en soi, la jonction entre l'armature de carcasse et les bords des nappes d'armature de sommet radialement les plus à l'intérieur et dont l'autre aile descend dans le flanc.

Selon ce dernier mode de réalisation, la nappe additionnelle permet d'une part de limiter la formation et la propagation des fissures dans les zones des extrémités des éléments de renfort et, d'autre part, d'apporter une protection contre les risques liés aux chocs sur les zones de flanc. En outre, la nappe additionnelle autorise une évacuation de la chaleur générée dans la zone d'épaule.

L'invention prévoit encore de combiner l'ensemble des différents modes de réalisation précités ou au moins deux d'entre eux, notamment l'utilisation d'une couche P de mélanges caoutchouteux constituée d'un empilement d'au moins deux couches de mélanges caoutchouteux $P_1$ et $P_2$ et/ou l'utilisation d'une couche de mélange caoutchouteux, GB et/ou l'utilisation d'une nappe d'éléments de renforcement de faible diamètre dans chaque épaule.

D'autres détails et caractéristiques avantageux de l'invention ressortiront ci-après de la description des exemples de réalisation de l'invention en référence aux figures 1 à 5, qui représentent:

Figure 1, une vue partielle en section méridienne d'un schéma d'un pneumatique selon une réalisation de l'invention,

Figure 2, une vue partielle en section méridienne d'un schéma d'un pneumatique selon une deuxième réalisation de l'invention,

Figure 3, une vue partielle en section méridienne d'un schéma d'un pneumatique selon une troisième réalisation de l'invention,

Figure 4, une vue partielle en section méridienne d'un schéma d'un pneumatique selon une quatrième réalisation de l'invention

Figure 5, une vue partielle en section méridienne d'un schéma d'un pneumatique selon une cinquième réalisation de l'invention.

Les figures ne sont pas représentées à l'échelle pour en faciliter la compréhension.

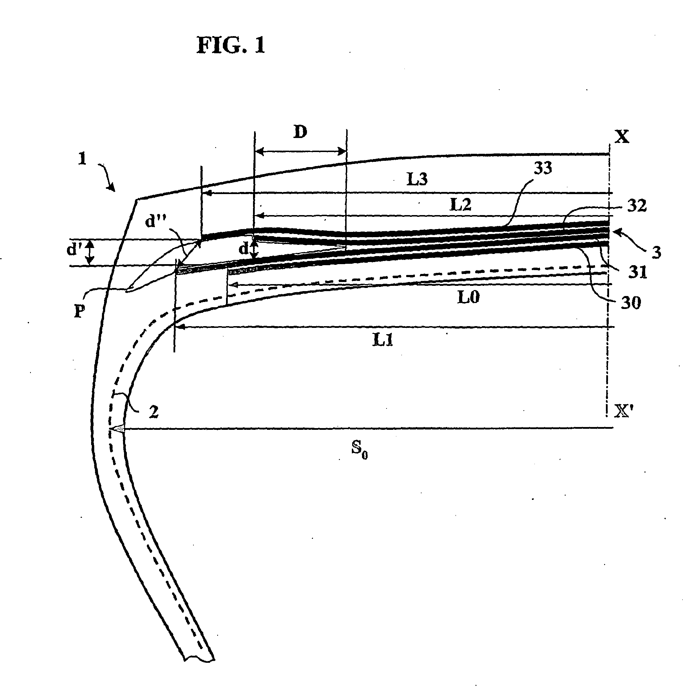

Sur la figure 1, est représentée une vue schématique partielle en section méridienne d'un pneumatique 1 de dimension 385/65.R.22,5 X. Les figures 1 à 5 ne représentent qu'une demi-vue des pneumatiques qui se prolongent de manière symétrique par rapport à l'axe XX' qui représente le plan médian circonférentiel, ou plan équatorial, d'un pneumatique.

Le pneumatique 1 comprend une armature de carcasse radiale composée d'une seule nappe 2 de câbles métalliques inextensibles, c'est-à-dire des câbles présentant sous une force de traction égale à 10% de la force de rupture un allongement au plus égal à 0,2%. Ladite armature de carcasse est ancrée dans chaque bourrelet ; lesdits bourrelets ne sont pas représentés sur les figures 1 à 5. Elle est radialement à l'extérieur surmontée d'une armature de sommet 3 comprenant radialement de l'intérieur à l'extérieur :

- une première nappe de sommet 30 dite de triangulation et formée de câbles métalliques inextensibles en acier, orientés d'un angle $\alpha_0$, égal dans le cas décrit à 50°,

- surmontant radialement ladite nappe 30, une première nappe de sommet de travail 31, formée de câbles métalliques inextensibles en acier faisant avec la direction circonférentielle un angle $\alpha_1$ égal à 18°, les câbles de la nappe de triangulation 30 et de la première nappe de travail ayant la même direction,

- radialement à l'extérieur et au contact de la nappe de sommet de travail 31, une couche P de mélanges caoutchouteux, dit gomme de découplage, recouvrant l'extrémité de ladite nappe de travail 31,

- puis une deuxième nappe de sommet de travail 32 formée de câbles métalliques identiques à ceux de la première nappe 31, et faisant avec la direction circonférentielle un angle $\alpha_2$, opposé à l'angle $\alpha_1$ et, dans le cas montré, égal en valeur absolue audit angle $\alpha_1$ de 18°, (mais pouvant être différent dudit angle $\alpha_1$),

- et enfin, radialement à l'extérieur de la nappe de sommet de travail 32, une dernière nappe 33 de câbles métalliques en acier dits élastiques, orientés par rapport à la direction circonférentielle d'un angle $\alpha_3$ de même sens que l'angle $\alpha_2$, mais supérieur en

valeur absolue audit angle $\alpha_2$ de 8° puisque égal à 26°, cette dernière nappe étant une nappe dite de protection.

La largeur axiale $L_1$ de la première nappe de travail 31 est égale à 0,78 fois la largeur axiale maximale So de la fibre moyenne de l'armature de carcasse 2 lorsque le pneumatique est monté sur sa jante de service et gonflé à sa pression recommandée, soit 280 mm, ce qui est, pour un pneumatique de forme usuelle inférieure à la largeur de la bande de roulement, qui est égale, dans le cas étudié, à 286 mm. La largeur axiale $L_2$ de la deuxième nappe de travail 32 est inférieure à la largeur $L_1$, puisque égale à 212 mm. La largeur axiale $L_0$ de la nappe de triangulation 30 est égale à 270 mm, ce qui représente 0,75 $S_0$. La largeur $L_3$ de la nappe de protection 33 est supérieure à la largeur $L_2$ de la nappe de travail 32 la moins large et radialement adjacente, et égale à 260 mm et donc inférieure à la largeur $L_1$.

La couche P de mélange caoutchouteux assure un découplage entre la nappe de travail 31 et l'extrémité de la nappe de travail 32 radialement extérieure. La zone d'engagement de la couche P entre les deux nappes de travail 31 et 32 est définie par son épaisseur ou plus précisément la distance radiale d entre l'extrémité de la nappe 32 et la nappe 31 et par sa largeur axiale D de la couche P comprise entre l'extrémité axialement intérieure de ladite couche P et l'extrémité de la nappe de sommet de travail radialement extérieure. La distance radiale d est égale à 2 mm. La distance axiale D est égale à 10 mm, soit environ 6 fois le diamètre $\phi_2$ des éléments de renforcement de la nappe de travail 32, le diamètre $\phi_2$ étant égal à 1.65 mm.

Par ailleurs, la distance radiale d', telle que définie précédemment comme étant la distance radiale entre l'extrémité de la nappe de protection 33, et la nappe de sommet de travail 31 est égale à 3.6 mm et est donc supérieure à la distance d et environ égale à $d+\phi_2$.

La distance d", telle que définie précédemment comme étant la distance entre l'extrémité de la nappe de sommet de travail radialement intérieure 31 et la nappe de protection, est quant à elle égale à 11.4 mm et donc bien supérieure à la distance d.

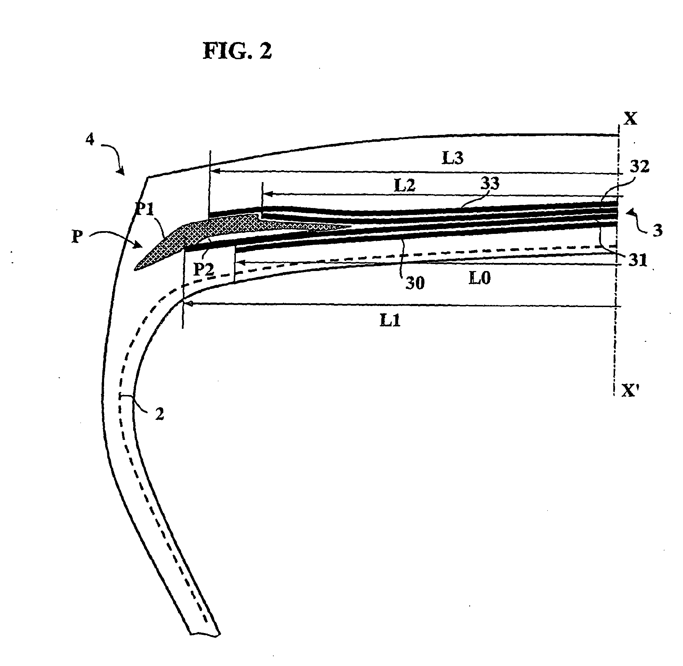

La figure 2 représente une vue schématique en section méridienne d'un pneumatique 4, semblable à celui de la figure 1 qui diffère de ce dernier par la présence d'une couche P de mélanges caoutchouteux subdivisée en deux couches $P_1$, $P_2$, la couche $P_1$ étant radialement extérieure à la couche $P_2$ et donc au moins au contact de la nappe de travail radialement extérieur 32. Quant à la couche $P_2$, elle est au contact de la nappe de travail radialement intérieure 31. Les modules d'élasticité à 10% d'élongation des couches $P_1$ et $P_2$, respectivement $MP_1$ et $MP_2$, sont choisis tels qu'ils satisfassent la relation suivante : $MP_1 \geq MP_2$. Une telle réalisation du pneumatique 4 autorise une diminution des sollicitations de la couche $P_1$ de mélange caoutchouteux au contact de la nappe de travail 32 par rapport aux sollicitations de la couche $P_2$ de mélange caoutchouteux au contact de la nappe de travail 31, ce qui permet d'améliorer encore la résistance de l'architecture sommet à la séparation entre les extrémités des nappes de travail.

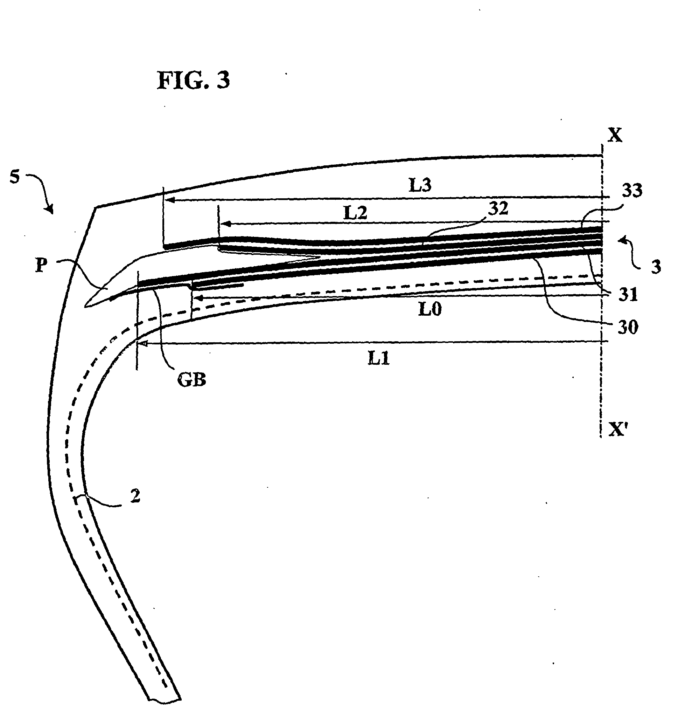

La figure 3 représente une vue schématique en section méridienne d'un pneumatique 5, semblable à celui de la figure 1 et qui en diffère par la présence d'une couche de mélange caoutchouteux GB radialement à l'intérieur de l'armature de travail. Cette couche de mélange caoutchouteux GB est mise en place de sorte que l'extrémité axialement extérieure de ladite couche GB est à une distance du plan équatorial supérieure à $L_1/2$, $L_1$ étant la largeur axiale de la première nappe de travail 31. La couche GB permet notamment par sa position radialement intérieure au contact de l'extrémité de la nappe de sommet de travail 31 d'améliorer la résistance à la propagation de fissures pouvant apparaître en extrémité de la nappe de travail 31.

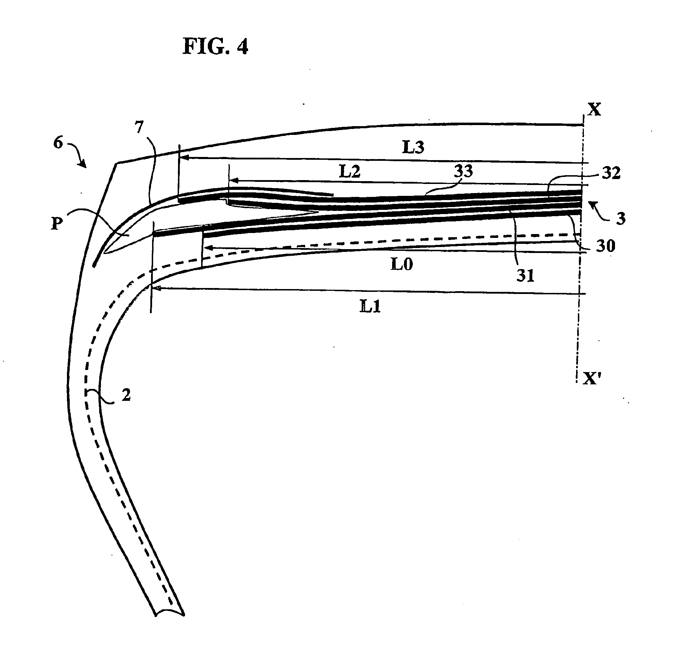

La figure 4 représente une vue schématique en section méridienne d'un pneumatique 6, semblable à celui de la figure 1, qui comporte en outre une nappe 7 d'éléments de renforcement, de faible diamètre, parallèles entre eux dans la nappe et orientés radialement, le bord axialement intérieur de ladite nappe additionnelle 7 étant radialement adjacent à au moins un bord de la nappe de protection 33 de l'armature de sommet 3, et le bord axialement extérieur de ladite nappe additionnelle étant radialement intérieur au bord de la nappe auquel la nappe additionnelle 7 est adjacente. La présence d'une telle nappe additionnelle 7 permet notamment de limiter l'apparition de fissures entre les extrémités des éléments de renforcement des nappes de travail notamment par un effet de protection mécanique et de protection thermique comme expliqué précédemment.

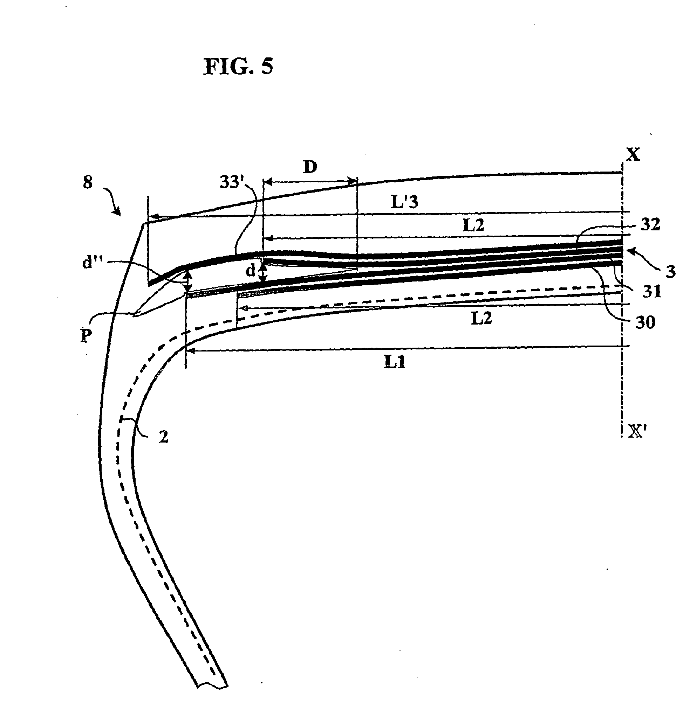

La figure 5 représente une vue schématique en section méridienne d'un pneumatique 8, semblable à celui de la figure 1 qui diffère de ce dernier par une nappe 33', dite de protection, de largeur $L'_3$, telle que $L'_3 > L_1$. Selon cette configuration, la nappe 33' de protection présente donc une largeur supérieure à la nappe de travail 31 ; elle est donc la nappe de l'armature de sommet la plus large. L'invention prévoit avantageusement que la distance d", définie comme étant la distance entre l'extrémité de la nappe de sommet de travail radialement intérieure et la nappe complémentaire, dite de protection, est supérieure à d. La couche P de mélanges caoutchouteux agit alors comme une couche de découplage entre la nappe de travail radialement intérieur et la nappe de protection, de sorte que les extrémités des éléments de renforcement de la nappe de travail radialement intérieure ne sont pas sollicitées du fait de la trop grande proximité des éléments de renforcement de la nappe de protection. Comme expliqué précédemment, selon l'invention, les éléments de renforcement ne pénètrent avantageusement pas un cercle de rayon d centré sur l'extrémité des éléments de renforcement de la nappe de travail radialement intérieure. Sur la figure 5, est représentée la distance d" selon la direction radiale.

Des pneumatiques décrits selon la figure 1 ont été testés en endurance à l'aide de roulages sur véhicules et sous fortes contraintes de dérive en comparaison avec des pneumatiques témoins, possédant une nappe de protection moins large que la deuxième nappe de travail et formée d'éléments de renforcement faisant avec la direction circonférentielle le même angle que les éléments de ladite nappe de travail.

Alors que les pneumatiques témoins ont réalisé en moyenne 6 686 km, les pneumatiques selon l'invention ont roulé pendant 11 493 km soit un gain d'environ 72%, sans que les dits pneus soient pénalisés au niveau des séparations observées entre les deux nappes de travail.

D'autres pneumatiques comportant une nappe de protection plus large que la nappe de travail radialement extérieur mais ne comportant pas de couche de mélanges caoutchouteux de découplage entre les nappes de travail ont également été testés. Dans les mêmes conditions que pour les essais précédents, ces pneumatiques ont réalisé en moyenne 10 595 Km soit 58% de plus que les pneumatiques témoins mais 8 % de moins par rapport aux pneumatiques selon l'invention.

**Revendications**

1. Pneumatique comprenant une armature de carcasse radiale (2) surmontée radialement d'une armature de sommet (3) composée d'au moins une armature de travail formée d'au moins deux nappes (31,32) d'éléments de renforcement métalliques inextensibles, calandrés de mélange caoutchouteux, parallèles entre eux dans chaque nappe et croisés d'une nappe à la suivante en formant avec la direction circonférentielle des angles $\alpha_1$ et $\alpha_2$ compris entre 10° et 45°, les dites nappes de travail (31,32) ayant des largeurs axiales $L_1$ et $L_2$, et d'au moins une nappe complémentaire (33), dite de protection, de largeur axiale $L_3$ telle que $L_2 < L_3$ ; $L_2$ étant la largeur de la nappe de travail (32) adjacente à la nappe de protection (33), et comportant des éléments de renforcement métalliques, une couche (P) de mélanges caoutchouteux cohésifs étant disposée entre au moins les extrémités des nappes de sommet de travail (31,32), **caractérisé en ce que** la couche de mélanges caoutchouteux (P) est constituée d'un empilement d'au moins deux couches de mélanges ($P_1$) et ($P_2$) de modules d'élasticités respectifs $MP_1$ et $MP_2$, à 10% d'élongation tels que $MP_1 > MP_2$, **en ce que** le mélange ($P_1$), radialement le plus extérieur, est au contact de la nappe de sommet de travail radialement la plus extérieure (32) et **en ce que** l'extrémité axialement extérieure de la couche de mélange caoutchouteux ($P_2$), radialement la plus intérieure, est de préférence axialement intérieure à l'extrémité de la nappe de sommet de travail radialement intérieure (31).

2. Pneumatique selon la revendication 1, **caractérisé en ce que** la nappe de protection (33) présente une largeur $L_3$, telle que $L_3 < L_1$.

3. Pneumatique selon la revendication 1 ou 2, **caractérisé en ce que** les nappes de travail (31,32) présentent des largeurs $L_1$ et $L_2$, telles que $L_2 < L_1$.

4. Pneumatique selon la revendication 3, **caractérisé en ce que** la couche (P), à l'extrémité axialement extérieure de la nappe de sommet de travail radialement extérieure (32), présente une épaisseur telle que la distance d radiale entre les deux nappes de sommet de travail (31,32), séparées par ladite couche (P), vérifie la relation:

$$3/5.\phi_2 < d < 5.\phi_2$$

avec $\phi_2$, diamètre des éléments de renforcement de la nappe de sommet de travail radialement extérieure (32).

5. Pneumatique selon l'une des revendications 2 à 4, la distance radiale entre les deux nappes de sommet de travail (31,32), séparées par la couche (P), étant égale à d, à l'extrémité de la nappe de sommet de travail radialement extérieure (32), **caractérisé en ce que** l'extrémité de la nappe complémentaire (33), dite de protection, est séparée radialement de la nappe de sommet de travail (31) de largeur $L_1$ par la couche (P) selon une distance d', telle que :

$$d \le d' < d + 4.\phi_2$$

avec $\phi_2$, diamètre des éléments de renforcement de la nappe de sommet de travail radialement extérieure (32).

6. Pneumatique selon l'une des revendications 1 à 5, la distance radiale entre les deux nappes de sommet de travail (31,32), séparées par la couche (P), étant égale à d, à l'extrémité de la nappe de sommet de travail radialement extérieure (32), **caractérisé en ce que** l'extrémité de la nappe de sommet de travail radialement intérieure (31) est distante de la nappe complémentaire (33), dite de protection, d'une distance d", telle que d" ≥ d.

7. Pneumatique selon l'une des revendications 1 à 5, **caractérisé en ce que** les largeurs $L_1$ et $L_2$ des nappes de sommet de travail (31,32) satisfont la relation :

$$\cdot 1 > L_2/L_1 \geq 2/3.$$

**8.** Pneumatique selon l'une des revendications précédentes, **caractérisé en ce que** la largeur axiale D de la couche (P) comprise entre l'extrémité axialement intérieure de ladite couche (P) et l'extrémité de la nappe de sommet de travail radialement extérieure (32) est telle que :

$$3.\phi_2 \leq D \leq 20.\phi_2$$

avec $\phi_2$, diamètre des éléments de renforcement de la nappe de sommet de travail radialement extérieure (32).

**9.** Pneumatique selon l'une des revendications précédentes, **caractérisé en ce que** les éléments de renforcement de la nappe de protection (33) sont inclinés dans la même direction que les éléments de renforcement de la nappe de travail radialement adjacente (32) en faisant avec la direction circonférentielle un angle $\alpha_3$ de même sens et supérieur ou égal à l'angle $\alpha_2$ des éléments de renforcement de la nappe de travail adjacente (32) à la nappe de protection (33).

**10.** Pneumatique selon l'une des revendications précédentes, **caractérisé en ce que** l'angle $\alpha_3$, formé par les éléments de renforcement de la nappe de protection (33) avec la direction circonférentielle, est supérieur en valeur absolue à l'angle $\alpha_2$ des éléments de ladite nappe de travail radialement adjacente (32) d'au moins 5°.

**11.** Pneumatique selon la revendication 9 ou 10, **caractérisé en ce que** la différence angulaire $\alpha_3$-$\alpha_2$ est au plus égale à 20°.

**12.** Pneumatique selon l'une des revendications précédentes, **caractérisé en ce que** l'armature de sommet (3) est complétée, radialement entre l'armature de carcasse (2) et l'armature de travail (31,32) par une nappe de triangulation (30) formée d'éléments métalliques inextensibles.

**13.** Pneumatique selon la revendication 12, **caractérisé en ce que** les éléments métalliques inextensibles formant la nappe de triangulation (30) font avec la direction circonférentielle un angle $\alpha_0$, de même direction que l'angle $\alpha_1$ formé par les éléments de renforcement de la nappe de travail radialement la plus intérieure (31), et compris entre 45° et 90°.

**14.** Pneumatique selon l'une des revendications précédentes, **caractérisé en ce que** la nappe de protection (33) est formée de câbles extensibles en acier.

**15.** Pneumatique selon l'une des revendications précédentes, **caractérisé en ce que** ledit pneumatique comprend une couche de mélange caoutchouteux cohésif (GB) radialement à l'intérieur de l'armature de travail (3), **en ce que** l'extrémité axialement extérieure de ladite couche (GB) est à une distance du plan équatorial supérieure à $L_1/2$.

**16.** Pneumatique selon la revendication 15, comprenant une nappe de triangulation (30) radialement entre l'armature de carcasse (2) et l'armature de travail (3), **caractérisé en ce que** la couche de mélange caoutchouteux (GB) est radialement intérieure à ladite nappe de triangulation (30).

**17.** Pneumatique selon l'une des revendications précédentes, **caractérisé en ce que** ledit pneumatique comprend, au moins dans chaque épaule, une nappe additionnelle (7) d'éléments de renforcement, avantageusement de faible diamètre, parallèles entre eux dans la nappe et formant avec la direction circonférentielle un angle compris entre 70 et 110°, le bord axialement intérieur de ladite nappe additionnelle (7) étant radialement adjacent à au moins un bord de l'une des nappes de l'armature de sommet (3), et le bord axialement extérieur de ladite nappe additionnelle (7) étant de préférence radialement intérieur au bord de la nappe (33) auquel la nappe additionnelle est adjacente.

**18.** Pneumatique selon la revendication 17, **caractérisé en ce que** le bord axialement extérieur de la nappe additionnelle d'épaule (7) se situe au moins dans la partie radialement supérieure de la zone du flanc et **en ce que** les éléments de renforcement de ladite nappe additionnelle (7) sont métalliques et de préférence en acier.

## Claims

**1.** A tyre comprising a radial carcass reinforcement (2) radially surmounted by a crown reinforcement (3) consisting of at least one working reinforcement formed of at least two plies (31, 32) of calendered inextensible metallic reinforcement elements, of rubber mix which are parallel to each other within each ply and are crossed from one ply to the next, forming angles $\alpha_1$ and $\alpha_2$ of between 10° and 45° with the circumferential direction, said working plies (31, 32) having axial widths $L_1$ and $L_2$, and of at least one supplementary ply (33), referred to as a protective ply, of axial width $L_3$ such that $L_2 < L_3$, $L_2$ being the width of the working ply (32) adjacent to the protective ply (33), and comprising metallic reinforcement elements, a layer P of cohesive rubber mixes being arranged between at least the ends of the working crown plies (31, 32), **characterised in that** the layer of rubber mixes P is formed of a stack of at least two layers of mix $P_1$ and $P_2$ of respective elasticity moduli $MP_1$ and $MP_2$, at 10% elongation such that $MP_1 > MP_2$, **in that** the radially outermost mix $P_1$ is in contact with the radially outermost working crown ply (32) and **in that** the axially outer end of the layer of rubber mix $P_2$, the radially innermost one, is preferably axially internal to the end of the radially inner working crown ply (31).

2. A tyre according to Claim 1, **characterised in that** the protective ply (33) has a width $L_3$, such that $L_3 < L_1$.

3. A tyre according to Claim 1 or 2, **characterised in that** the working plies (31, 32) have widths $L_1$ and $L_2$, such that $L_2 < L_1$.

4. A tyre according to Claim 3, **characterised in that** the layer P, at the axially outer end of the radially outer working crown ply (32), has a thickness such that the radial distance d between the two working crown plies (31, 32), separated by said layer P, satisfies the relationship:

$$3/5.\phi_2 < d < 5.\phi_2$$

where $\phi_2$ is the diameter of the reinforcement elements of the radially outer working crown ply (32).

5. A tyre according to Claims 2 to 4, the radial distance between the two working crown plies (31, 32), separated by the layer P, being equal to d, at the end of the radially outer working crown ply (32), **characterised in that** the end of the supplementary ply (33), referred to as a protective ply, is separated radially from the working crown ply (31) of width $L_1$ by the layer P at a distance d', such that:

$$d \le d' < d + 4.\phi_2$$

where $\phi_2$ is the diameter of the reinforcement elements of the radially outer working crown ply (32).

6. A tyre according to one of Claims 1 to 5, the radial distance between the two working crown plies (31, 32), separated by the layer P, being equal to d, at the end of the radially outer working crown ply (32), **characterised in that** the end of the radially inner working crown ply (31) is distant from the supplementary ply (33), referred to as a protective ply, by a distance d", such that $d'' \ge d$.

7. A tyre according to one of Claims 1 to 5, **characterised in that** the widths of the working crown plies (31, 32) satisfy the relationship:

$$1 > L_2/L_1 \ge 2/3.$$

8. A tyre according to one of the preceding claims, **characterised in that** the axial width D of the layer P between the axially inner end of said layer P and the end of the radially outer working crown ply (32) is such that:

$$3.\phi_2 \le D \le 20.\phi_2$$

where $\phi_2$ is the diameter of the reinforcement elements of the radially outer working crown ply (32).

9. A tyre according to one of the preceding claims, **characterised in that** the reinforcement elements of the protective ply (33) are inclined in the same direction as the reinforcement elements of the radially adjacent working ply (32), forming with the circumferential direction an angle $\alpha_3$ of the same direction and greater than or equal to the angle $\alpha_2$ of the reinforcement elements of the working ply (32) adjacent to the protective ply (33).

10. A tyre according to one of the preceding claims, **characterised in that** the angle $\alpha_3$, formed by the reinforcement elements of the protective ply (33) with the circumferential direction, is greater in absolute value than the angle $\alpha_2$ of the elements of said radially adjacent working ply (32) by at least 5°.

11. A tyre according to Claim 9 or 10, **characterised in that** the angular difference $\alpha_3 - \alpha_2$ is at most equal to 20°.

12. A tyre according to one of the preceding claims, **characterised in that** the crown reinforcement (3) is finished off, radially between the carcass reinforcement (2) and the working reinforcement (31, 32), by a triangulation ply (30) formed of inextensible metallic elements.

13. A tyre according to Claim 12, **characterised in that** the inextensible metallic elements forming the triangulation ply (30) form with the circumferential direction an angle $\alpha_0$ of the same direction as the angle $\alpha_1$ formed by the reinforcement elements of the radially innermost working ply (31) and of between 45° and 90°.

**14.** A tyre according to one of the preceding claims, **characterised in that** the protective ply (33) is formed of extensible steel cables.

**15.** A tyre according to one of the preceding claims, **characterised in that** said tyre comprises a layer of cohesive rubber mix GB radially to the inside of the working reinforcement (3), **in that** the axially outer end of said layer GB is at a distance from the equatorial plane greater than $L_1/2$.

**16.** A tyre according to Claim 15, comprising a triangulation ply (30) radially between the carcass reinforcement (2) and the working reinforcement (3), **characterised in that** the layer of rubber mix GB is radially internal to said triangulation ply (30).

**17.** A tyre according to one of the preceding claims, **characterised in that** said tyre comprises, at least in each shoulder, an additional ply (7) of reinforcement elements, advantageously of small diameter, which are parallel to each other in the ply and forming with the circumferential direction an angle of between 70 and 110°, the axially inner edge of said additional ply (7) being radially adjacent to at least one edge of one of the plies of the crown reinforcement (3), and the axially outer edge of said additional ply (7) preferably being radially internal to the edge of the ply (33) to which the additional ply is adjacent.

**18.** A tyre according to Claim 17, **characterised in that** the axially outer edge of the additional shoulder ply (7) is located at least in the radially upper part of the zone of the sidewall and **in that** the reinforcement elements of said additional ply (7) are metallic and preferably made of steel.

**Patentansprüche**

**1.** Luftreifen, der eine radiale Karkassenbewehrung (2) enthält, über der radial eine Scheitelbewehrung (3) angeordnet ist, die aus mindestens einer Arbeitsbewehrung besteht, welche von mindestens zwei Lagen (31, 32) von mit einer Kautschukmischung kalandrierten, metallischen, nicht dehnbaren Verstärkungselementen, die in jeder Lage parallel zueinander und von einer Lage zur nächsten gekreuzt verlaufen, indem sie mit der Umfangsrichtung Winkel $\alpha_1$ und $\alpha_2$ zwischen 10° und 45° bilden, wobei die Arbeitslagen (31, 32) axiale Breiten $L_1$ und $L_2$ haben, und von mindestens einer zusätzlichen Lage (33), Schutzlage genannt, geformt wird, die eine derartige axiale Breite $L_3$ hat, dass gilt $L_2 < L_3$; wobei $L_2$ die Breite der der Schutzlage (33) benachbarten Arbeitslage (32) ist, und metallische Verstärkungselemente aufweist, wobei eine Schicht (P) von kohäsiven Kautschukmischungen zwischen mindestens den Enden der Arbeitsscheitellagen (31, 32) angeordnet ist, **dadurch gekennzeichnet, dass** die Schicht (P) von Kautschukmischungen aus einer Stapelung von mindestens zwei Schichten $(P_1)$ und $(P_2)$ von Mischungen mit derartigen Elastizitätsmodulen $MP_1$ bzw. $MP_2$ bei 10 % Dehnung besteht, dass gilt $MP_1 > MP_2$, dass die radial am weitesten außen liegende Mischung $(P_1)$ mit der radial am weitesten außen liegenden Arbeitsscheitellage (32) in Kontakt ist, und dass das axial äußere Ende der radial am weitesten innen liegenden Schicht $(P_2)$ aus Kautschukmischung vorzugsweise bezüglich des Endes der radial inneren Arbeitsscheitellage (31) axial innen liegt.

**2.** Luftreifen nach Anspruch 1, **dadurch gekennzeichnet, dass** die Schutzlage (33) eine derartige Breite $L_3$ hat, dass gilt $L_3 < L_1$.

**3.** Luftreifen nach Anspruch 1 oder 2, **dadurch gekennzeichnet, dass** die Arbeitslagen (31, 32) derartige Breiten $L_1$ und $L_2$ haben, dass gilt $L_2 < L_1$.

**4.** Luftreifen nach Anspruch 3, **dadurch gekennzeichnet, dass** die Schicht (P) am axial äußeren Ende der radial äußeren Arbeitsscheitellage (32) eine solche Dikke hat, dass der radiale Abstand d zwischen den zwei durch die Schicht (P) getrennten Arbeitsscheitellagen (31, 32) folgende Beziehung erfüllt:

$$3/5.\phi_2 < d < 5.\phi_2$$

mit $\phi_2$ dem Durchmesser der Verstärkungselemente der radial äußeren Arbeitsscheitellage (32).

**5.** Luftreifen nach einem der Ansprüche 2 bis 4, wobei der radiale Abstand zwischen den zwei durch die Schicht (P) getrennten Arbeitsscheitellagen (31, 32) am Ende der radial äußeren Arbeitsscheitellage (32) gleich d ist, **dadurch gekennzeichnet, dass** das Ende der zusätzlichen Lage (33), Schutzlage genannt, radial von der Arbeitsscheitellage (31) der Breite $L_1$ durch die Schicht (P) gemäß einem derartigen Abstand d' getrennt wird, dass gilt:

$$d \leq d' < d+4.\phi_2$$

mit $\phi_2$ dem Durchmesser der Verstärkungselemente der radial äußeren Arbeitsscheitellage (32).

**6.** Luftreifen nach einem der Ansprüche 1 bis 5, wobei der radiale Abstand zwischen den zwei durch die Schicht (P) getrennten Arbeitsscheitellagen (31, 32) am Ende der radial äußeren Arbeitsscheitellage (32) gleich d ist, **dadurch gekennzeichnet, dass** das Ende der radial inneren Arbeitsscheitellage (31) einen derartigen Abstand d" von der zusätzlichen Lage (33), Schutzlage genannt, hat, dass gilt d" $\geq$ d.

7. Luftreifen nach einem der Ansprüche 1 bis 5, **dadurch gekennzeichnet, dass** die Breiten $L_1$ und $L_2$ der Arbeitsscheitellagen (31, 32) die folgende Beziehung erfüllen:

$$1 > L_2/L_1 \geq 2/3$$

8. Luftreifen nach einem der vorhergehenden Ansprüche, **dadurch gekennzeichnet, dass** die axiale Breite D der Schicht (P) zwischen dem axial inneren Ende der Schicht (P) und dem Ende der radial äußeren Arbeitsscheitellage (32) derart ist, dass gilt:

$$3.\phi_2 \leq D \leq 20.\phi_2$$

mit $\phi_2$ dem Durchmesser der Verstärkungselemente der radial äußeren Arbeitsscheitellage (32).

9. Luftreifen nach einem der vorhergehenden Ansprüche, **dadurch gekennzeichnet, dass** die Verstärkungselemente der Schutzlage (33) in der gleichen Richtung geneigt sind wie die Verstärkungselemente der radial benachbarten Arbeitsscheitellage (32), indem sie mit der Umfangsrichtung einen Winkel $\alpha_3$ gleicher Richtung und größer als der oder gleich dem Winkel $\alpha_2$ der Verstärkungselemente der der Schutzlage (33) benachbarten Arbeitslage (32) bilden.

10. Luftreifen nach einem der vorhergehenden Ansprüche, **dadurch gekennzeichnet, dass** der Winkel $\alpha_3$, der von den Verstärkungselementen der Schutzlage (33) mit der Umfangsrichtung gebildet wird, im Absolutwert um mindestens 5° größer ist als der Winkel $\alpha_2$ der Elemente der radial benachbarten Arbeitslage (32).

11. Luftreifen nach Anspruch 9 oder 10, **dadurch gekennzeichnet, dass** die Winkeldifferenz $\alpha_3 - \alpha_2$ höchstens gleich 20° ist.

12. Luftreifen nach einem der vorhergehenden Ansprüche, **dadurch gekennzeichnet, dass** die Scheitelbewehrung (3) radial zwischen der Karkassenbewehrung (2) und der Arbeitsbewehrung (31, 32) durch eine Triangulationslage (30) vervollständigt wird, die von nicht dehnbaren metallischen Elementen gebildet wird.

13. Luftreifen nach Anspruch 12, **dadurch gekennzeichnet, dass** die die Triangulationslage (30) bildenden, nicht dehnbaren metallischen Elemente mit der Umfangsrichtung einen Winkel $\alpha_0$ gleicher Richtung wie der Winkel $\alpha_1$ bilden, der von den Verstärkungselementen der radial am weitesten innen liegenden Arbeitslage (31) gebildet wird, und der zwischen 45° und 90° liegt.

14. Luftreifen nach einem der vorhergehenden Ansprüche, **dadurch gekennzeichnet, dass** die Schutzlage (33) von dehnbaren Stahlkorden gebildet wird.

15. Luftreifen nach einem der vorhergehenden Ansprüche, **dadurch gekennzeichnet, dass** der Luftreifen eine Schicht aus kohäsiver Kautschukmischung (GB) radial innen bezüglich der Arbeitsbewehrung (3) aufweist, dass das axial äußere Ende der Schicht (GB) einen Abstand zur Äquatorialebene von mehr als $L_1/2$ hat.

16. Luftreifen nach Anspruch 15, der eine Triangulationslage (30) radial zwischen der Karkassenbewehrung (2) und der Arbeitsbewehrung (3) enthält, **dadurch gekennzeichnet, dass** die Schicht aus Kautschukmischung (GB) zur Triangulationslage (30) radial innen liegt.

17. Luftreifen nach einem der vorhergehenden Ansprüche, **dadurch gekennzeichnet, dass** der Luftreifen zumindest in jeder Schulter eine zusätzliche Lage (7) von Verstärkungselementen enthält, vorteilhafterweise mit geringem Durchmesser, parallel zueinander in der Lage und mit der Umfangsrichtung einen Winkel bildend, der zwischen 70 und 110° liegt, wobei der axial innere Rand der zusätzlichen Lage (7) radial mindestens einem Rand einer der Lagen der Scheitelbewehrung (3) benachbart ist, und der radial äußere Rand der zusätzlichen Lage (7) vorzugsweise radial innen bezüglich des Rands der Lage (33) liegt, der die zusätzliche Lage benachbart ist.

18. Luftreifen nach Anspruch 17, **dadurch gekennzeichnet, dass** der axial äußere Rand der zusätzlichen Schulterlage (7) sich mindestens in dem radial oberen Bereich der Zone der Flanke befindet, und dass die Verstärkungselemente der zusätzlichen Lage (7) aus Metall und vorzugsweise aus Stahl sind.

FIG. 1

**FIG. 2**

FIG. 3

## FIG. 4

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 59118507 A
- JP 3262704 A
- JP 4055104 A

- FR 2493236
- FR 2800672
- WO 9939927 A